# EUROPÄISCHE PATENTANMELDUNG

(11) **EP 1 426 393 A2**
(43) Veröffentlichungstag der Anmeldung: **09.06.2004**
(21) Anmeldenummer: 03027009.4
(22) Anmeldetag: 22.11.2003
(51) Int. Cl.: C08G 18/79

(54) **Monomerenarme uretdiongruppenhaltige Polyisocyanate**

(30) Priorität: 05.12.2002 DE 10256798
(71) Anmelder: Bayer MaterialScience AG, 51368 Leverkusen (DE)
(72) Erfinder: Richter, Frank, Dr., 51373 Leverkusen (DE); Halpaap, Reinhard, Dr., 51519 Odenthal (DE); Laas, Hans Josef, Dr., 51467 Bergisch Gladbach (DE); Hecking, Andreas, 40764 Langenfeld (DE)

(57) **Zusammenfassung**

Die Erfindung betrifft uretdiongruppenhaltige Polyisocyanate, die besonders monomerenarm und rückspaltstabil sind sowie deren Verwendung.

## Beschreibung

Die Erfindung betrifft uretdiongruppenhaltige Polyisocyanate, die besonders monomerenarm und rückspaltstabil sind sowie deren Verwendung.

Uretdiongruppen enthaltende aliphatische Polyisocyanate mit linearalipatischen Substituenten an den N-Atomen der Uretdion-Vierringe, wie sie beispielsweise aus monomerem Hexamethylendiisocyanat (HDI) zugänglich sind, sind niedrig viskose Produkte, die in monomerenarmer Form trotzdem den für Polyisocyanatharze typischen, niedrigen Dampfdruck besitzen und daher physiologisch unbedenklich sind.

Uretdiongruppen aufweisende aliphatische Polyisocyanate auf Basis cycloaliphatischer Monomere, insbesondere Isophorondiisocyanat (IPDI), sind hochviskose bis feste Produkte, die hauptsächlich als Intermediate für die Herstellung von Polyurethan-Pulverlacken eingesetzt werden.

DE-A 3 030 513 lehrt die Herstellung von Polyisocyanaten mit hohen Uretdionanteilen. Als Oligomerisierungskatalysatoren werden Tris(dialkylamino)phosphine ggf. in Verbindung mit Cokatalysatoren (DE-A 3 437 635) eingesetzt. Ihrer technischen Einsetzbarkeit steht allerdings der schwerwiegende Makel des hohen krebserzeugenden Potenzials ihrer Phosphor(V)-oxide, z.B. Hexamethylphosphorsäuretriamid, entgegen.

DE-A 3 739 549 offenbart die katalytische NCO-Dimerisierung mit 4-Dialkylaminopyridinen, wie z.B. 4-Dimethylaminopyridin (DMAP), wobei allerdings nur im Fall spezieller cycloaliphatischer Isocyanate wie Isophorondiisocyanat (IPDI) die Uretdionbildung selektiv verläuft. Linearaliphatische Isocyanate wie Hexamethylendiisocyanat (HDI) sowie verzweigte, linearaliphatische Isocyanate wie Trimethylhexandiisocyanat (TMDI) und Methylpentandiisocyanat (MPDI) liefern mit DMAP und verwandten Verbindungen hauptsächlich stark gefärbte, heterogene Reaktionsprodukte.

DE-A 1 670 720 offenbart die Herstellung von Uretdiongruppen aufweisenden aliphatischen Polyisocyanaten, wobei als Katalysatoren Trialkylphosphine mit mindestens einem aliphatischen Substituenten sowie Bortrifluorid und seine Addukte eingesetzt werden. Die Uretdion-Selektivität ist bei diesem Verfahren allerdings stark umsatz- und temperaturabhängig, so dass nur bei niedrigen Umsätzen und Reaktionstemperaturen oberhalb 50°C bis maximal 80°C hohe Anteile (> 50 mol.-% bezogen auf die Gesamtheit der durch Isocyanat-Oligomerisierung entstandenen Strukturtypen) an Uretdiongruppen im Produkt erhalten werden können. Anderenfalls werden Isocyanat-Trimere (Isocyanurate und Iminooxadiazindione) und, insbesondere bei höherer Temperatur, auch andere Nebenprodukte wie Carbodiimide oder Uretonimine verstärkt gebildet.

Zur Begrenzung des Umsatzes bei der Katalyse mit tertiären Phosphinen, werden Alkylierungsreagenzien wie Dimethylsulfat (DE-A 1 670 720), Toluolsulfonsäuremethylester (EP-A 377 177) oder aber Katalysatorgifte wie Schwefel (DE-A 19 54 093) als Abstopper der aktiven Reaktionsmischung zugesetzt. Die deaktivierten Katalysatoren und/oder ggf. überschüssig eingesetzter Abstopper verbleiben anschließend - zumindest anteilig - im Produkt und können zu unerwünschten Eigenschaften im Polyisocyanat oder in daraus hergestellten Beschichtungen und Werkstoffen führen. Deshalb sind Verfahrensweisen, die ohne derartige Stopper auskommen, zu bevorzugen.

EP-A 337 116 offenbart ebenfalls die Oligomerisierung von Hexamethylendiisocyanat katalysiert durch Tributylphosphin unter Verwendung eines Abstoppers zur Umsatzbegrenzung. Bei Reaktionsführung unterhalb 40°C weisen die Uretdiongruppen-aufweisenden Polyisocyanat-Harze nach Restmonomerabtrennung allerdings noch einen Gehalt von 0,4 Gew.-% an freiem HDI auf. Führt man dagegen die Oligomerisierung oberhalb 40°C durch, sinkt der HDI Gehalt auf 0,2 Gew.-%. Daher erscheint die Wahl von Reaktionstemperaturen < 40°C für die Herstellung von Uretdiongruppen aufweisenden Polyisocyanaten mit besonders geringen Restmonomeranteilen (< 0,2 Gew.-%) ungeeignet.

DE-A 32 27 779 offenbart die Uretdionbildung anhand von 2-Methyl-1,5-diisocyanatopentan/2-Ethyl-1,4-diisocyanatobutan-Gemischen mit Tri-n-butylphosphin als Katalysator bei Raumtemperatur, wobei allerdings Polyisocyanate mit einem Uretdiongruppengehalt von höchstens 30 Gew.-% erhalten werden.

Die Verfahren des Standes der Technik zur Isocyanatdimerisierung führen zu Produkten, die zum Teil sehr uneinheitlich in Bezug auf ihre Stabilität gegen Rückspaltung des Uretdion-Vierringes sind. Dies kann bei Lagerung über Wochen und Monate bei Temperaturen oberhalb 40°C zur Zersetzung von Uretdiongruppen führen, was sich in über die Zeit zunehmenden Anteilen an freiem, monomerem Diisocyanat bemerkbar machen kann.

Aufgabe der Erfindung war es daher, ein auch technisch einsetzbares Verfahren zur Herstellung von Uretdiongruppen aufweisenden Isocyanaten zur Verfügung zu stellen, deren Restmonomerengehalt niedriger und deren Rückspaltstabilität höher gegenüber Uretdiongruppen aufweisenden Polyisocyanaten ist, die nach Verfahren des Standes der Technik hergestellt wurden.

Es konnte nun gefunden werden, dass bei Temperaturen ≤ 40°C unter Verzicht auf Abstopper die Oligomerisierung von Isocyanaten unter Katalyse mit tertiären Phosphinen zu Polyisocyanaten mit einem Uretdiongruppen Gehalt > 50 mol.-% führt (bezogen auf die Gesamtheit der durch Isocyanat-Oligomerisierung entstandenen Strukturtypen), deren Restmonomergehalt unter 0,3 Gew.-% liegt und auch nach 6 monatiger Lagerung bei 50°C nicht über 0,5 Gew.-% ansteigt.

Gegenstand der Erfindung sind Polyisocyanate mit einem Uretdiongruppen-Gehalt > 50 mol.-%, bezogen auf die Gesamtheit der durch Isocyanat-Oligomerisierung entstandenen Strukturtypen, deren Restmonomergehalt unter 0,3 Gew.-% liegt und auch nach 6 monatiger Lagerung bei 50°C nicht über 0,5 Gew.-% ansteigt.

Ein weiterer Gegenstand der Erfindung ist Verfahren zur Herstellung dieser Polyisocyanate, bei dem
a) mindestens ein organisches Isocyanats bei Reaktionstemperaturen von ≤ + 40°C mit einem Katalysator, der mindestens ein Trialkylphosphin enthält, umgesetzt wird, so dass der Umsatz der freien NCO-Gruppen 1 bis 80 Gew.-% beträgt und anschließend
b) der aktive Katalysator und ggf. nicht umgesetztes Restmonomer aus der Reaktionsmischung abgetrennt wird.

Zur Herstellung der erfindungsgemäßen Uretdiongruppen-haltigen Polyisocyanate können prinzipiell alle bekannten, durch Phosgenierung oder nach phosgenfreien Verfahren hergestellte organische Mono-, Di- und/oder Polyisocyanate einzeln oder in beliebigen Mischungen untereinander verwendet werden.

Bevorzugt ist die Verwendung von linearaliphatischen Polyisocyanaten mit einer NCO-Funktionalität ≥ 2 wie beispielsweise Pentandiisocyanat, Hexandiisocyanat (HDI), Heptandiisocyanat, Octandiisocyanat, Nonandiisocyanat, Dekandiisocyanat, Undekandiisocyanat und Dodecandiisocyanat.

Als erfindungsgemäß zu verwendende Trialkylphosphine eignen sich alle tertiären Phosphine der allgemeinen Formel I einzeln oder in beliebigen Mischungen untereinander, 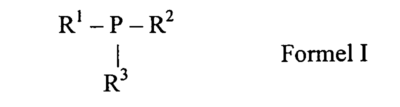 wobei
- R¹, R², R³:: unabhängig voneinander ein ggf. ein oder mehrfach C₁-C₁₂ alkyl- oder alkoxy- substituierter cycloaliphatischer C₃-C₂₀-Rest oder ein linear oder verzweigt aliphatischer C₁-C₂₀-Rest ist.

Bevorzugt sind
- R¹: ein ggf. ein- oder mehrfach C₁-C₁₂ alkylsubstituierter Cyclopropyl-, Cyclobutyl-, Cyclopentyl- oder Cyclohexyl-Rest,
- R², R³: unabhängig voneinander ein ggf. ein- oder mehrfach C₁-C₁₂ alkylsubstituierter Cyclopropyl-, Cyclobutyl-, Cyclopentyl- oder Cyclohexyl-Rest oder ein aliphatischer C₂-C₈-Alkylrest

Erfindungsgemäß zu verwendende Phosphine sind beispielsweise Trimethylphosphin, Triethylphosphin, Tripropylphosphin, Tributylphosphin, Cyclopentyl-dimethylphosphin, Pentyl-dimethylphosphin, Cyclopentyl-diethylphosphin, Pentyl-diethylphosphin, Cyclopentyl-di-propylphosphin, Pentyl-di-propylphosphin, Cyclopentyldibutylphosphin, Pentyl-dibutylphosphin, Cyclopentyl-dihexylphosphin, Pentyldihexylphosphin, Dicyclopentyl-methylphosphin, Dipentyl-methylphosphin, Dicyclopentyl-ethylphosphin, Dipentyl-ethylphosphin, Dicyclopentyl-propylphosphin, Dipentyl-propylphosphin, Dicyclopentyl-butylphosphin, Dipentyl-butylphosphin, Dicyclopentyl-hexylphosphin, Dipentyl-hexylphosphin, Dicyclopentyl-octylphosphin, Dipentyl-octylphosphin, Tricyclopentylphosphin, Tripentylphosphin, Cyclohexyldimethylphosphin, Hexyl-dimethylphosphin, Cyclohexyl-diethylphosphin, Hexyldiethylphosphin, Cyclohexyl-dipropylphosphin, Hexyl-dipropylphosphin, Cyclohexyl-dibutylphosphin, Hexyl-dibutylphosphin, Cyclohexyl-dihexylphosphin, Hexyldihexylphosphin, Dicyclohexyl-methylphosphin, Dihexyl-methylphosphin, Dicyclohexyl-ethylphosphin, Dihexyl-ethylphosphin, Dicyclohexyl-propylphosphin, Dihexyl-propylphosphin, Dicyclohexyl-butylphosphin, Dihexyl-butylphosphin, Tricyclohexylphosphin, Trihexylphosphin oder Trioctylphosphin.

Der Katalysator kann unverdünnt oder in Lösungsmitteln gelöst eingesetzt werden. Als Lösungsmittel kommen dabei alle Verbindungen in Frage, die nicht mit Phosphinen reagieren, wie z.B. aliphatische oder aromatische Kohlenwasserstoffe, Alkohole, Ketone, Ester sowie Ether. Bevorzugt werden die Phosphine im erfindungsgemäßen Verfahren unverdünnt eingesetzt.

Die Menge des im erfindungsgemäßen Verfahren einzusetzenden Katalysators richtet sich in erster Linie nach der angestrebten Reaktionsgeschwindigkeit und liegt im Bereich 0,01 bis 5 Mol.-%, bevorzugt 0,01 bis 3 Mol-%, bezogen auf die Summe der Stoffmengen in Mol des eingesetzten Isocyanates und des Katalysators. Besonders bevorzugt werden 0,05 bis 3 Mol.-%, ganz besonders bevorzugt 0,05 bis 2 Mol-%, Katalysator eingesetzt.

Die Herstellung der erfindungsgemäßen Polyisocyanate erfolgt bei Temperaturen ≤ 40°C, bevorzugt wird eine Temperatur von - 40°C bis + 40°C, besonders bevorzugt von 0°C bis + 30°C, ganz besonders bevorzugt 0°C bis 30°C, gewählt.

Der Umsatz der freien NCO-Gruppen (Harzausbeute) kann im erfindungsgemäßen Verfahren in weiten Grenzen variieren. Bevorzugt sind Umsätze von 1 bis 80 Gew.-%, bevorzugt sind 5 bis 60 Gew.-%, insbesondere 5 bis 50 Gew.-%

Um die Isocyanatumsetzung bei einem gewünschten Umsetzungsgrad abzubrechen, wird der in der Reaktionsmischung enthaltene Katalysator bevorzugt destillativ, insbesondere über Dünnschichtdestillation abgetrennt.

Gleichzeitig mit oder auch nach der Katalysatorabtrennung kann nicht umgesetztes Monomer aus der Reaktionsmischung, z.B. durch Destillation abgetrennt werden.

Die Reaktion kann diskontinuierlich oder kontinuierlich geführt werden. Bei der kontinuierlichen Weise wird der destillativ vom Produkt abgetrennte, ggf. monomerhaltige Katalysator erneut in die Isocyanat-Dimerisierung eingesetzt.

Weiterhin können zu einem beliebigen Zeitpunkt der Herstellung der erfindungsgemäßen Polyisocyanate in der Polyisocyanatchemie übliche Additive und Stabilisatoren zugesetzt werden. Beispiele sind Antioxidanzien, wie z.B. sterisch gehinderte Phenole (2,6-Di-tert.butylphenol, 4-Methyl-2,6-di-tert.butylphenol), Lichtschutzmittel, wie z.B. HALS-Amine, Triazole etc., schwache Säuren oder Katalysatoren für die NCO-OH-Reaktion wie z.B. Dibutylzinndilaurat (DBTL).

Des weiteren kann es sinnvoll sein, einem aufgearbeiteten Produkt geringe Mengen eines zum Stand der Technik zählenden Alkylierungsmittels oder Katalysatorgiftes zuzusetzen, um Restmengen Katalysator zu deaktivieren, so dass zum einen die Rückspaltstabilität weiter erhöht wird und zum anderen die Neigung zu Nebenproduktbildung bzw. Weiterreaktion der freien NCO-Gruppen, z.B. bei Produktlagerung, verringert wird.

Die erfindungsgemäßen Polyisocyanate weisen einen NCO-Gehalt von 5 bis 27,5 % und einen Gehalt an freiem Monomer < 0,3 Gew.-%, bevorzugt < 0,2 Gew.-%, insbesondere < 0,1 Gew.-% auf, der auch nach 6-monatiger Lagerung bei 50°C nicht über 0,5 Gew.-% ansteigt.

Der Uretdiongruppen Gehalt der erfindungsgemäßen Polyisocyanate bezogen auf die Gesamtheit der durch Isocyanat-Oligomerisierung entstandenen Strukturtypen ist > 50 mol.-%, bevorzugt > 65 mol.-%.

Einweiterer Gegenstand der Erfindung ist die Verwendung der erfindungsgemäßen Polyisocyanate zur Herstellung von Polyurethanwerkstoffen, Beschichtungen, Klebstoffen und Zuschlagstoffen.

Ggf. können die nicht uretdionisierten Isocyanatgruppen auch in blockierter Form vorliegen, wobei zur Blockierung alle dem Fachmann bekannten Methoden geeignet sind. Als Blockierungsmittel können insbesondere Phenole (z.B. Phenol, Nonylphenol, Kresol), Oxime (z.B. Butanonoxim, Cyclohexanonoxim), Lactame (z.B. ε-Caprolactam), sekundäre Amine (z.B. Diisopropylamin), Pyrazole (z.B. Dimethylpyrazol), Imidazole, Triazole) oder Malon- und Essigsäureester verwendet werden.

Die erfindungsgemäßen, Uretdiongruppen-aufweisenden Polyisocyanate können insbesondere zur Herstellung von Ein- und Zweikomponenten-Polyurethanlacken ggf. in Mischungen mit anderen Di- oder Polyisocyanaten des Standes der Technik, wie Biuret-, Urethan-, Allophanat-, Isocyanurat-, sowie Iminooxadiazindiongruppen enthaltenden Di- oder Polyisocyanaten eingesetzt werden.

Ebenfalls besonders bevorzugt ist die Verwendung der erfindungsgemäß hergestellten Polyisocyanate auf Basis linearaliphatischer Isocyanate als Reaktivverdünner zur Viskositätserniedrigung höherviskoser Polyisocyanat-Harze.

Zur Umsetzung der erfindungsgemäßen Polyisocyanate zum Polyurethan können alle Verbindungen mit mindestens zwei isocyanatreaktiven Funktionalitäten einzeln oder in beliebigen Mischungen untereinander (isocyanatreaktives Bindemittel) eingesetzt werden.

Bevorzugt ist die Verwendung eines oder mehrerer, in der Polyurethanchemie an sich bekannter, isocyanatreaktiver Bindemittel wie Polyhydroxyverbindungen oder Polyamine. Als Polyhydroxyverbindungen werden besonders bevorzugt Polyester-, Polyether-, Polyacrylat- und/oder Polycarbonsäure-Polyole, ggf. auch unter Zusatz niedermolekularer, mehrwertiger Alkohole eingesetzt.

Das Äquivalentverhältnis zwischen nicht uretdionisierter Isocyanatgruppe, die ggf. auch blockiert sein kann, und isocyanatreaktiver Funktionalität des isocyanatreaktiven Bindemittels, wie z.B. OH-, NH- oder COOH, liegt von 0,8 bis 3, vorzugsweise 0,8 bis 2.

Möglich ist der Einsatz eines Überschusses an isocyanatreaktivem Bindemittel, da die Spaltung des Uretdionringes ggf. bei erhöhter Temperatur und/oder Katalysatorzusatz zur Freisetzung weiterer NCO-Gruppen führt, die mit dem Überschuss an isocyanatreaktiven Funktionalitäten reagieren können. Dadurch erhöht sich die Netzwerkdichte des gebildeten Polymers und dessen Eigenschaften werden vorteilhaft beeinflusst.

Für die Beschleunigung der Vernetzungsreaktion der Polyisocyanate mit dem isocyanatreaktiven Bindemittel können alle aus der Polyurethanchemie bekannten Katalysatoren verwendet werden. Beispielweise können Metallsalze wie Dibutylzinn-IVdilaurat, Zinn-II-bis(2-ethylhexanoat), Wismut-III-tris(2-ethylhexanoat), Zink-IIbis(2-ethylhexanoat) oder Zinkchlorid sowie tertiäre Amine wie 1,4-Diazabicyclo-(2,2,2)oktan, Triethylamin oder Benzyldimethylamin verwendet werden.

Bei der Formulierung werden das erfindungsgemäße, ggf. blockierte Polyisocyanat, das isocyanatreaktive Bindemittel, Katalysator(en) und ggf. die üblichen Zusätze wie Pigmente, Füllstoffe, Additive, Verlaufshilfsmittel, Entschäumer und/oder Mattierungsmittel miteinander auf einem üblichen Mischaggregat wie z.B. einer Sandmühle, ggf. unter Verwendung von Lösungsmitteln, vermischt und homogenisiert.

Als Lösungsmittel geeignet sind alle an sich bekannten üblichen Lacklösemittel wie z.B. Ethyl- und Butylacetat, Ethylen- oder Propylenglykolmono-methyl-, -ethyl- oder -propyletheracetat, 2-Butanon, 4-Methyl-2-pentanon, Cyclohexanon, Toluol, Xylol, Solventnaphtha, N-Methylpyrrolidon etc.

Die Beschichtungsmittel können in Lösung oder aus der Schmelze sowie ggf. in fester Form (Pulverlacke) nach den üblichen Methoden wie z.B. Streichen, Rollen, Gießen, Spritzen, Tauchen, dem Wirbelsinterverfahren oder durch elektrostatische Sprühverfahren auf dem zu beschichtenden Gegenstand appliziert werden.

Ein weiterer Gegenstand der Erfindung sind Substrate beschichtet mit Beschichtungen hergestellt aus den erfindungsgemäßen Polyisocyanaten.

Als Substrate eignen sich sämtliche bekannten Werkstoffe, insbesondere Metalle, Holz, Kunststoffe und Keramik.

### Beispiele

Alle Prozentangaben sind, soweit nicht anders vermerkt, als Gewichtsprozent (Gew.-%) zu verstehen.

Unter der Angabe Raumtemperatur werden 23 ± 3°C verstanden.

Die Ermittlung des NCO-Gehaltes der in den Beispielen und Vergleichsbeispielen beschriebenen Harze erfolgte durch Titration gemäß DIN 53 185.

Die Monomergehalte wurden gaschromatografisch gemäß DIN 55 956 bestimmt.

Die dynamischen Viskositäten wurden bei 23°C mit einem Rotationsviskosimeter (ViscoTester® 550, Thermo Haake GmbH, D-76227 Karlsruhe) bestimmt. Durch Messungen bei unterschiedlichen Schergeschwindigkeiten wurde sichergestellt, dass das Fließverhalten der beschriebenen erfindungsgemäß hergestellten Polyisocyanate wie auch das der Vergleichsprodukte dem idealer Newtonscher Flüssigkeiten entspricht. Die Angabe der Schergeschwindigkeit kann deshalb entfallen.

Die Angabe 'Mol.-%' bzw. des molaren Verhältnisses unterschiedlicher Strukturtypen zueinander basiert auf NMR-spektroskopischen Messungen. Sie bezieht sich, wenn nicht anders angegeben, auf die Summe der durch die Modifizierungsreaktion (Oligomerisierung) aus den vorher freien NCO-Gruppen des zu modifizierenden Isocyanates gebildeten Strukturtypen. Die ¹³C-NMR-Messungen erfolgten auf den Geräten DPX 400, AVC 400 bzw. DRX 700 der Fa. Bruker an ca. 50 %igen Proben in trockenem CDCl₃ bei einer Protonenfrequenz von 400 bzw. 700 MHz (¹³C-NMR: 100 bzw 176 MHz, relaxation delay: 4 sec, 2000 scans). Als Referenz für die ppm-Skale wurden geringe Mengen von Tetramethylsilan im Lösungsmittel mit einer ¹³Cchem. Verschiebung von 0 ppm bzw. das Lösungsmittel selbst mit einer Verschiebung von 77,0 ppm (CDCl₃) gewählt.

### Beispiel 1 (Vergleich)

| **Tabelle 1:** Reaktionsparameter | | |
|---|---|---|
| Beispiel | Katalysator | Temperatur |
| 1a | 10 g Tris(diethylamino)phosphin | 60°C |
| 1b | 1,5 g Tributylphosphin | 60°C |
| 1a: Vergleich zu DE-A 32 27 779 | | |
| 1b: Vergleich zu DE-A 16 70 720 | | |

Jeweils 1000 g frisch destilliertes, entgastes HDI wurden unter Stickstoff mit dem in Tabelle 1 angegebenen Katalysator versetzt und bei 60°C bis zum Erreichen eines Brechungsindex' (bei 20°C und der Frequenz des Lichtes der D-Linie des Natriumspektrums, n_{D}²⁰) der Reaktionsmischung von ca. 1,4600 bis 1,4650 (Start = kein Umsatz = n_{D}²⁰ des reinen HDI = 1,4523) gerührt. Anschließend wurde in einem Dünnschichtverdampfer, Typ Kurzwegverdampfer (KWV), mit vorgeschaltetem Vorverdampfer (VV) bei einer Temperatur des Heizmediums von 140°C (VV) bzw. 150°C (KWV) und einem Vakuum von 0,1 bis 0,5 mbar aufgearbeitet, wobei nicht umgesetztes Monomer und der aktive Katalysator abgetrennt wurden. Das Destillat wurde mit frischem, entgastem HDI auf 1000 g ergänzt, erneut unter den o.g. Reaktionsbedingungen ohne Zugabe weiteren Katalysators unter Stickstoff bis zum Erreichen des o.g. Brechungsindexbereiches von ca. 1,4600 bis 1,4650 gerührt und anschließend aufgearbeitet wie beschrieben. Diese Vorgehensweise wurde insgesamt noch 2 Mal wiederholt, so dass je Katalysator die Polyisocyanat-Harze 1-4 erhalten wurden (Tabelle 2).

Anschließend wurden die Produkte bei 50°C gelagert und es wurde der Restmonomergehalt über einen Zeitraum von 6 Monaten verfolgt (Tabelle 3).

**Tabelle 2:**

| Produkteigenschaften aus Beispiel 1 | | | | | | |
|---|---|---|---|---|---|---|
| Beispiel | n_{D}²⁰ bei Destillations-beginn | Harzmenge | NCO-Gehalt | Viskosität | freies HDI nach Destillation | Uretdione |
| | | [g] | [%] | [mPas] | [%] | [mol-%] |
| 1a-1 | 1,4646 | 395 | 20,8 | 55 | 0,46 | 99 |
| 1a-2 | 1,4651 | 375 | 21,1 | 67 | 0,45 | 97 |
| 1a-3 | 1,4638 | 326 | 21,4 | 66 | 0,62 | 97 |
| 1a-4 | 1,4623 | 329 | 22,7 | 50 | 0,74 | 98 |
| 1b-1 | 1,4650 | 271 | 22,0 | 130 | 0,08 | 76 |
| 1b-2 | 1,4619 | 260 | 22,4 | 110 | 0,09 | 77 |
| 1b-3 | 1,4600 | 202 | 23,3 | 76 | 0,08 | 78 |
| 1b-4 | 1,4625 | 276 | 22,7 | 94 | 0,09 | 80 |

**Tabelle 3:**

| Gehalt an freiem HDI in [%] nach Lagerung bei 50°C | | | | | |
|---|---|---|---|---|---|
| Beispiel | Start | Nach 1 Monat | Nach 2 Monaten | Nach 4 Monaten | Nach 6 Monaten |
| 1a-1 | 0,46 | 0,65 | 0,72 | 0,76 | 0,84 |
| 1a-2 | 0,45 | 0,54 | 0,55 | 0,58 | 0,61 |
| 1a-3 | 0,62 | 0,58 | 0,64 | 0,65 | 0,67 |
| 1a-4 | 0,74 | 0,78 | 0,82 | 0,93 | 1,00 |
| 1b-1 | 0,08 | 0,37 | 0,43 | 0,59 | 0,68 |
| 1b-2 | 0,09 | 0,43 | 0,51 | 0,68 | 0,84 |
| 1b-3 | 0,08 | 0,55 | 0,66 | 0,84 | 1,11 |
| 1b-4 | 0,09 | 0,43 | 0,52 | 0,68 | 0,89 |

Wie man sieht, resultieren bei Verwendung des potenziell carcinogen Katalysators P(NEt₂)₃ Harze mit hoher Rückspaltstabilität bei jedoch schlechtem Anfangsmonomergehalt während bei Einsatz von Tributylphosphin zwar Harze mit sehr niedrigem Anfangsmonomergehalt anfallen, die aber innerhalb weniger Wochen der Lagerung bei 50°C stark zur Rückspaltung neigen.

### Beispiel 2

Es wurde in Analogie zur Verfahrensweise aus Beispiel 1 mit folgenden Katalysatoren und Temperaturen gearbeitet

**Tabelle 4:**

| Reaktionsparameter | | |
|---|---|---|
| Beispiel | Katalysator | Temperatur |
| 2a | 1,5 g Tributylphosphin | Raumtemperatur |
| 2b | 2,5 g Cyclohexyl-di-n-hexylphosphin | Raumtemperatur |
| 2c (Vergleich) | 2,5 g Cyclohexyl-di-n-hexylphosphin | 60°C |
| 2d (Vergleich) | 2,5 g Cyclohexyl-di-n-hexylphosphin | 80°C |

Aufarbeitung und Analysen erfolgen wie in Beispiel 1 angegeben. Die Daten sind in Tabelle 5 und 6 aufgeführt.

**Tabelle 5:**

| Produkteigenschaften aus Beispiel 2 | | | | | | |
|---|---|---|---|---|---|---|
| Beispiel | n_{D}²⁰ bei Destillations-beginn | Harzmenge | NCO-Gehalt | Viskosität | freies HDI nach Destillation | Uretdione |
| | | [g] | [%] | [mPas] | [%] | [mol.-%] |
| 2a-1 | 1,4579 | 152 | 23,9 | 106 | 0,08 | 74 |
| 2a-2 | 1,4612 | 238 | 23,1 | 156 | 0,06 | 72 |
| 2a-3 | 1,4614 | 241 | 22,9 | 125 | 0,06 | 71 |
| 2a-4 | 1,4728 | 449 | 20,7 | 330 | 0,04 | 67 |
| 2b-1 | 1,4632 | 255 | 22,5 | 175 | 0,06 | 71 |
| 2b-2 | 1,4584 | 124 | 23,5 | 119 | 0,08 | 71 |
| 2b-3 | 1,4628 | 223 | 22,5 | 160 | 0,07 | 71 |
| 2b-4 | 1,4634 | 235 | 22,4 | 160 | 0,06 | 69 |
| 2c-1 | 1,4668 | 306 | 21,3 | 195 | 0,08 | 74 |
| 2c-2 | 1,4655 | 301 | 21,7 | 163 | 0,06 | 75 |
| 2c-3 | 1,4626 | 273 | 22,1 | 126 | 0,08 | 78 |
| 2c-4 | 1,4618 | 220 | 22,3 | 83 | 0,06 | 79 |
| 2d-1 | 1,4640 | 301 | 22,6 | 97 | 0,17 | 79 |
| 2d-2 | 1,4699 | 325 | 21,3 | 215 | 0,15 | 77 |
| 2d-3 | 1,4664 | 320 | 21,9 | 145 | 0,14 | 74 |
| 2d-4 | 1,4655 | 347 | 22,1 | 141 | 0,14 | 73 |

**Tabelle 6:**

| Gehalt an freiem HDI in [%] nach Lagerung bei 50°C | | | |
|---|---|---|---|
| Beispiel | Start | Nach 1 Monat | Nach 6 Monaten |
| 2a-1 | 0,08 | 0,14 | 0,26 |
| 2a-2 | 0,06 | 0,18 | 0,29 |
| 2a-3 | 0,06 | 0,16 | 0,28 |
| 2a-4 | 0,04 | 0,12 | 0,24 |
| 2b-1 | 0,06 | 0,16 | 0,28 |
| 2b-2 | 0,08 | 0,24 | 0,43 |
| 2b-3 | 0,07 | 0,24 | 0,39 |
| 2b-4 | 0,06 | 0,17 | 0,32 |
| 2c-1 | 0,08 | 0,46 | 0,62 |
| 2c-2 | 0,06 | 0,49 | 0,66 |
| 2c-3 | 0,08 | 0,53 | 0,73 |
| 2c-4 | 0,06 | 0,35 | 0,59 |
| 2d-1 | 0,17 | 0,66 | 0,88 |
| 2d-2 | 0,15 | 0,84 | 1,01 |
| 2d-3 | 0,14 | 0,86 | 0,88 |
| 2d-4 | 0,14 | 0,96 | 1,25 |

Die erfindungsgemäß bei Zimmertemperatur hergestellten Harze (Beispiele 2a und 2b) weisen selbst nach 6 monatiger thermischer Belastung Restmonomergehälte < 0,5 Gew.-% auf, wohingegen die Harze der Vergleichsversuche, hergestellt bei höherer Reaktionstemperatur (Vergleichsbeispiele 2c und 2d), stärker zur Rückspaltung neigen.

### Beispiel 3 (erfindungsgemäß)

Die Isocyanatoligomerisierung wie auch die Aufarbeitung wurde analog zur Vorgehensweise in Beispiel 1 durchgeführt.

| | |
|---|---|
| Katalysator | Temperatur |
| 13 g n-Butyl-dicyclopentylphosphin | 40°C |

**Tabelle 7:**

| Produkteigenschaften aus Beispiel 3 | | | | | | |
|---|---|---|---|---|---|---|
| Beispiel | n_{D}²⁰ bei Destillations-beginn | Harzmenge[g] | NCO-Gehalt [%] | Viskosität | fr. HDI nach Destillation | Uretdione |
| | | | | [mPas] | [%] | [mol-%] |
| 3-1 | 1,4694 | 440 | 20,9 | 125 | 0,09 | 81 |
| 3-2 | 1,4694 | 430 | 20,6 | 132 | 0,06 | 80 |
| 3-3 | 1,4696 | 410 | 20,8 | 140 | 0,06 | 81 |
| 3-4 | 1,4696 | 390 | 20,9 | 127 | 0,04 | 81 |

**Tabelle 8:**

| Gehalt an freiem HDI in [%] nach Lagerung bei 50°C | | |
|---|---|---|
| Beispiel | Start | 6 Monate |
| 3-1 | 0,09 | 0,42 |
| 3-2 | 0,06 | 0,38 |
| 3-3 | 0,06 | 0,40 |
| 3-4 | 0,04 | 0,36 |

## Patentansprüche

1. Polyisocyanate mit einem Uretdiongruppen-Gehalt > 50 mol.-%, bezogen auf die Gesamtheit der durch Isocyanat-Oligomerisierung entstandenen Strukturtypen, deren Restmonomergehalt unter 0,3 Gew.-% liegt und auch nach 6 monatiger Lagerung bei 50°C nicht über 0,5 Gew.-% ansteigt.

2. Verfahren zur Herstellung der Polyisocyanate nach Anspruch 1, bei dem
a) mindestens ein organisches Isocyanats bei Reaktionstemperaturen von ≤ + 40°C mit einem Katalysator, der mindestens ein Trialkylphosphin enthält, umgesetzt wird, so dass der Umsatz der freien NCO-Gruppen 1 bis 80 Gew.-% beträgt und anschließend
b) der aktive Katalysator und ggf. nicht umgesetztes Restmonomer aus der Reaktionsmischung abgetrennt wird.

3. Verwendung der Polyisocyanate nach Anspruch 1 zur Herstellung von Polyurethanwerkstoffen, Beschichtungen, Klebstoffen und Zuschlagstoffen.

4. Substrate beschichtet mit Beschichtungen erhältlich aus Polyisocyanaten nach Anspruch 1.
